# EUROPEAN PATENT SPECIFICATION

(11) **EP 4 116 354 B1**
(45) Date of publication and mention of the grant of the patent: **12.02.2025**
(21) Application number: 21184147.3
(22) Date of filing: 07.07.2021
(51) Int. Cl.: C08G 63/199, C08G 63/87, C08G 18/42, C09J 175/06, C08G 63/672, C08G 63/553

(54) **POLYESTER POLYOL AND THE PREPARATION METHOD THEREOF**
POLYESTERPOLYOL UND VERFAHREN ZU DESSEN HERSTELLUNG
POLYOL DE POLYESTER ET SON PROCÉDÉ DE PRÉPARATION

(43) Date of publication of application: 11.01.2023
(73) Proprietor: Henkel AG & Co. KGaA, 40589 Düsseldorf (DE)
(72) Inventor: Brandt, Adrian, 45219 Essen (DE); Kux, Alexander, 40789 Monheim (DE); Beck, Horst, 41470 Neuss (DE); Brenger, Andreas, 40221 Düsseldorf (DE)

(56) References cited:
- EP-A1- 2 439 224
- EP-A1- 3 660 072
- WO-A1-2018/058016
- US-A1- 2009 253 888
- US-A1- 2019 077 908

## Description

### Technical Fields

The present invention relates to a polyester polyol, in particular a bio-based polyester polyol, and to the preparation method thereof. Further, the present invention relates to a polyurethane adhesive composition comprising the polyester polyol.

### Background

Polyester polyol is one of the raw materials for producing polyurethanes, and usually is a linear polymer obtained from the condensation polymerization of polyfunctional carboxylic acids and polyols. The condensation polymerization is a reversible reaction, but as the viscosity of reactive mixture increases in the later stage of the reaction, water as reaction product cannot be readily separated from the reaction mixture. Therefore, the forward reaction direction must be maintained by ways of heating, increasing agitation rate, etc. However, if the reaction time is overly long, costs will be increased, and the properties of the polyester polyols may be deteriorated. To shorten the reaction time, suitable catalysts in the condensation polymerization of polyester polyols have been widely used.

On the other hand, renewable and bio-based derived resources have been successfully developed and a range of bio-based derived polyols, such as coconut oil, natural rubber, rubber seed oil, cashew nut/shell oil, soybean oil, as well as isosorbide have been adopted for polyester polyols.

Among others, isosorbide could be produced through catalytic dehydration of sorbitol, which are the hydrogenated products of widespread bio-renewable glucose. As the typical bio-based chemical, isosorbide possesses many unique characteristics such as rigid structure of V-shaped diol molecule, high thermal stability, biodegradability, renewability, solubility in water and non-toxicity, which could contribute many features to the polymer materials with isosorbide as the monomer. Recently, isosorbide has been used to prepare polyester polyols for polyurethane adhesives.

For example, US 20130109804 A1 discloses a polycarbonate diol, obtained by reacting at least one of diols selected from isosorbide, isomannide and isoidide, a diol having 1 to 15 carbons which may contain hetero atom, and (iii) a diester carbonate, by use of a metal catalyst as a transesterification catalyst. EP 3 660 072 A1 discloses polyester polyols obtained by reacting isosorbide with a dicarboxylic acid in presence of a titanium catalyst. WO 2018/058016 A1 discloses low coloured polyester polyols obtained by reacting isosorbide with a dicarboxylic acid in presence of a tin catalysts. US 2009/253888 A1 discloses low coloured polyester polyols which are obtained in presence of an organic non-metal phosphine compound as catalyst.

US 9309438 B2 discloses a radiation curable composition comprising at least one (meth)acrylated compound (A); and at least one inert OH-terminated polyester (B) that is prepared from a polyol component comprising at least one cyclic ether polyol and from a polyacid component by using strong acids like alkyl- and/or aryl sulphonic acids or organo metal compounds as catalysts.

However, due to the reactivity of isosorbide, when polyester polyol containing high amount of building blocks of isosorbide is polymerized by conventional methods, it has been found that the reaction product appears in deep color, indicating that isosorbide encounters side effect in the presence of conventional catalysts during the polymerization. Therefore, it would be desirable to produce a polyester polyol containing high isosorbide content in high conversion rate.

### Summary

A first object of the invention is to provide a polyester polyol derived from a reaction mixture comprising
at least one anhydrohexitol,
at least one polyfunctional carboxylic acid, and
at least one non-metal inorganic acidic catalyst, selected from a non-metal inorganic acidic compound having phosphorus atom in oxidation state of +1, a non-metal inorganic acidic compound having phosphorus atom in oxidation state of +3, and mixture thereof.

Another object of the invention is to provide a polyurethane adhesive composition, comprising a polyol component comprising at least one polyester polyol according to the present invention and an isocyanate component comprising at least one polyfunctional isocyanate.

Yet another object of the invention is to provide a polyurethane adhesive composition, comprising a prepolymer being a reaction product of a polyol component comprising at least one polyester polyol according to the present invention and an isocyanate component comprising at least one polyfunctional isocyanate.

Yet another object of the invention is to provide a one-part, two-part or multiple-part adhesive system, comprising the reactive adhesive composition according to the present invention.

Yet another object of the invention is to provide a method of bonding materials together which comprises applying a one-part, two-part or multiple-part adhesive system according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The term "bio-based" refers to materials or products at least partly derived from biomass, such as plants, trees or animals, which may have undergone physical, chemical or biological treatment. The term "fully bio-based" refers to materials or products fully derived from biomass, such as plants, trees or animals, which may have undergone physical, chemical or biological treatment.

The recitation of numerical end points includes all numbers and fractions subsumed within the respective ranges, as well as the recited end points.

All references cited in the present specification are hereby incorporated by reference in their entirety. If reference is made herein to a molecular weight of a polymer, this reference refers to the average number weight Mₙ, unless stated otherwise. The number average molecular weight Mₙ of a polymer can, for example, be determined by gel permeation chromatography (GPC) with THF as the eluent. If not stated otherwise, all given molecular weights are those determined by GPC, calibrated with polystyrene standards. The average molecular weight M_{w} can also be determined by GPC, as described for Mₙ.

The disclosed polyester polyol is derived/obtained from a reaction mixture comprising at least one anhydrohexitol, at least one polyfunctional carboxylic acid, and at least one non-metal inorganic acidic catalyst, selected from a non-metal inorganic acidic compound having phosphorus atom in oxidation state of +1, a non-metal inorganic acidic compound having phosphorus atom in oxidation state of +3, and mixture thereof.

Anhydrohexitols are obtained by dehydration of hexitols like sorbitol (glucitol), mannitol, iditol, which are produced by reducing the carbonyl group of hexoses like glucose, mannose, idose that are typically derived from several biological feedstocks like wheat, corn, cellulose.

The double dehydration results in dianhydrohexitols. Usually, the anhydrohexitol is a dianhydrohexitol like dianhydromannitol, dianhydrosorbitol, dianhydroiditol and mixtures thereof. The dianhydrohexitol preferably is a dianhydrosorbitol, such as isosorbide, isomannide and isoidide, and more in particular is isosorbide. A few companies have specialized in the production of isosorbide, isomannide and isoidide.

Preferably, the amount of the at least one anhydrohexitol is from 20 mol% to 60 mol% based on the total moles of the reactants of the polyester polyol.

In addition to anhydrohexitol, the reactants of the polyester polyol may optionally comprise at least one polyol other than anhydrohexitol to react with the polyfunctional carboxylic acid.

Examples of such polyols include monoethylene glycol, 1,2-propanediol, 1,3-propanediol, 1,3-butanediol (including R-form, S-form and racemates), 1,4-butanediol, 1,4-pentanediol, 3-methylpentane-1,5-diol, neopentyl glycol (2,2-dimethyl-1,3-propanediol), 1,5-pentanediol, 1,6-hexanediol, 1,8-otaneglycol, cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol.

Preferably, the polyol other than anhydrohexitol is fully bio-based. Examples of such polyol include but not limited to glycerol, 1,2-propanediol, 1,3-propanediol, 1,3-butanediol (including R-form, S-form and racemate), 1,4-butanediol, 1,4-pentanediol, 1,5-pentanediol, ethylene glycol, diethylene glycol and triethylene glycol. These polyols are used alone or in combination.

In one embodiment, the reactants of the polyester polyol comprise at least one polyol other than anhydrohexitol. If present, the amount of the polyol other than anhydrohexitol is from 1 mol% to 35 mol% based on the total moles of the reactants of the polyester polyol.

In another embodiment, the reactants of the polyester polyol only comprise anhydrohexitol as the source of polyol for the preparation of polyester polyol according to the present invention.

The polyester polyols are preparable by polycondensation of the anhydrohexitol and optionally at least one polyol other than anhydrohexitol with a substoichiometric amount of a polyfunctional carboxylic acid in the presence of the catalyst according to the present invention. Preferably the polyfunctional carboxylic acids have from 2 to 36 carbon atoms, such as dicarboxylic acids and/or tricarboxylic acids, or their reactive derivatives, such as carboxylic anhydride, chloride and ester.

Examples of the dicarboxylic acid include adipic acid, succinic acid, azelaic acid, sebacic acid, dodecane dioic acid, tetradecane dioic acid, hexadecane dioic acid, octadecane dioic acid, itaconic acid, furandicarboxylic acid, isophthalic acid, terephthalic acid, orthophthalic acid, dimerized fatty acids, trimerzed fatty acids and the like. These dicarboxylic acids are used alone or in combination. Examples of the carboxylic anhydride include adipic anhydride, succinic anhydride and the like.

These dicarboxylic anhydrides are used alone or in combination. In one embodiment, the polyfunctional carboxylic acids are selected from succinic acid, azelaic acid, sebacic acid, dimerized fatty acid, trimerzed fatty acid, and mixture thereof.

Dimerized fatty acids are the dimerization product of mono- or polyunsaturated acids and/or esters thereof. Preferred dimerized fatty acids are dimers of C10- to C36-, more preferably C12- to C24-, particularly C14- to C22- alkyl chains. Suitable dimerized fatty acids include the dimerization products of oleic acid, linoleic acid, linolenic acid, palmitoleic acid and elaidic acid. The dimerization products of the unsaturated fatty acid mixtures obtained in the hydrolysis of natural fats and oils, e.g., sunflower oil, soybean oil, olive oil, rapeseed oil, cottonseed oil and tall oil may also be used. Examples of the dimerized (dimer) fatty acids are Pripol 1019, 1013, 1017, 1006 commercially available from Croda.

According to the present invention, the amount of the at least one polyfunctional carboxylic acid is not larger than 50 mol%, and preferably from 40 to 50 mol%, based on the total moles of the reactants of the polyester polyol.

The polycondensation of the anhydrohexitol and an optional polyol with the polyfunctional carboxylic acid is conducted in the presence of at least one catalyst. The catalyst is a non-metal inorganic acidic catalyst, selected from a non-metal inorganic acidic compound having phosphorus atom in oxidation state of +1, a non-metal inorganic acidic compound having phosphorus atom in oxidation state of +3, and mixture thereof. In one preferred embodiment, the at least one non-metal inorganic acidic catalyst is selected from phosphinic acid, phosphonic acid, and mixture thereof. In one more preferred embodiment, the non-metal inorganic acidic catalyst is phosphinic acid.

The reaction mixture for preparing the polyester polyol may further comprise at least one solvent, such as water. If present, the solvent is contained in an amount of 0.01 to 1% by weight and more particularly in an amount from 0.1 to 0.5% by weight of the total weight of the reactants. The non-metal inorganic acidic catalyst may be first dissolved in water in a weight ratio of 5:1 to 1:5, and preferably 1:1, and then mixed with other reactants to form the reaction mixture.

The inventors have surprisingly found that the non-metal inorganic acidic catalyst according to the present invention could prevent the degradation of anhydrohexitol during the polycondensation reaction under elevated temperature, for example at local areas of polymerization reactor.

Preferably, the amount of the non-metal inorganic acidic catalyst used in the polycondensation reaction is in the range from 0.001 to 5% by weight and more particularly in the range from 0.02 to 1% by weight of the total weight of the reactants.

In addition, the reaction mixture of the polyester polyol essentially comprises no other catalyst such as metal catalyst, amine catalyst or inorganic phosphorus acid having phosphorus atom in oxidation state of +5. Preferably, it comprises less than 0.05% by weight, in particular less than 0.02% by weight of such catalyst based on the total weight of the reaction mixture. In one preferred embodiment, the reaction mixture of the polyester polyol contains no other catalyst.

Examples of metal catalyst are aluminium alkoxides, titanium alkoxides, magnesium alkoxides and zirconium alkoxides, tin compounds, more particularly organotin carboxylates, such as dibutyltin dilaurate, dibutyltin diacetate, dibutyltin bis-(2-ethylhexanoate) or other organotin compounds, such as dibutyltin oxide, dibutyltin dimethoxide, dibutyltin dibromide, dibutyltin dichloride, ditert.butyltin dichloride, dimethyltin dibromide, dimethyltin dichloride, diphenyltin dichloride or tin octoate, iron acetate, iron benzoate, iron naphthenates; iron acetyl acetonates, manganese acetate, manganese naphthenate and manganese acetyl acetonate.

According to the present invention, the polyester polyols containing a higher amount of anhydrohexitol building blocks are preferably prepared by the method comprising the steps (1) providing a reaction mixture comprising at least one anhydrohexitol, at least one polyfunctional carboxylic acid, at least one non-metal inorganic acidic catalyst and optionally at least one linear or branched aliphatic polyol to form a mixture, (2) heating stepwise the mixture to 200°C to 220°C and maintaining 20 to 40 hours under nitrogen flow, (3) reducing the pressure stepwise to 1 to 300 mbar to complete the reaction, and (4) cooling the reaction mixture when the acid value of the reaction mixture is no more than 5, and obtaining a polyester polyol.

In the present invention, there is no limitation to the physical properties of the polyester polyols prepared by the method as described above. Preferably, the polyester polyols are fully bio-based, and are in the form of amorphous liquid, crystalline solid or amorphous solid at room temperature.

Generally, there is no limitation to the molecular weight of the polyester polyol used in the adhesive composition as long as it has no negative effect on the properties of the adhesive composition and the cured adhesive. Preferably, the polyester polyol has a molecular weight Mₙ of 500 to 20,000 g/mol, in particular 1,000 to 10,000 g/mol.

In the present invention, the polyester polyol preferably has an acid value of 0.1 to 5, and preferably 1 to 3 mgKOH/g. On the assumption that all acid groups included in 1 g of the resin are free acids, the "acid value" of the polyester polyol according to the present invention is expressed by a calculated value of a number of milligrams of potassium hydroxide which is needed to neutralize the acid. Therefore, even though the acid groups exist as a base in an actual system, they are assumed as a free acid. The "acid value" according to the present invention is determined by dissolving the polyester polyol in a solvent, adding phenolphthalein as an indicator, and titrating with a 0.1 mol/I potassium hydroxide-ethanol solution according to DIN 51558.

In the present invention, the polyester polyol may have a hydroxyl value of 5 to 150 mgKOH/g, preferably 10 to 120 mgKOH/g and in particular 15 to 100 mgKOH/g. As used herein, the hydroxyl value means a number of mgs of potassium hydroxide which is required to neutralize acetic acid bonding to the hydroxyl group when 1 g of the resin is acetylated.

The "hydroxyl value" according to the present invention is determined according to DIN 51558 by adding an acetylation reagent to the polyester polyol, heating with a glycerin solution, allowing to cool, then adding phenolphthalein as an indicator, and titrating with a potassium hydroxide-ethanol solution.

In the present invention, the polyester polyol may have a glass transition temperature of -100°C to 100°C. The glass transition temperature of the polyester polyol is measured using a differential scanning calorimeter. With respect to a proper amount of a sample, a DSC curve was measured at a temperature rise rate of 10°C/minute by differential scanning calorimetry and the temperature of an inflection point of the obtained DSC curve was regarded as the glass transition temperature.

In one embodiment, the polyester polyol, preferably fully bio-based derived polyester polyol is an amorphous liquid. Preferably, such polyester polyol has an acid value from 0.1 to 3 mgKOH/g. Preferably, such polyester polyol has a hydroxy value from 30 to 120 mgKOH/g, more preferably from 50 to 100 mgKOH/g. Preferably, such polyester polyol has a Tg from -70 to -20°C, and more preferably from -30 to -60°C.

In another embodiment, the polyester polyol, preferably fully bio-based derived polyester polyol is a crystalline solid. Preferably, such polyester polyol has an acid value from 0.1 to 3 mgKOH/g. Preferably, such polyester polyol has a hydroxy value from 20 to 100 mgKOH/g, more preferably from 30 to 60 mgKOH/g, Preferably, such polyester polyol has a melting temperature from 30 to 100°C, and preferably from 40 to 70°C.

In yet another embodiment, the polyester polyol, preferably fully biologically derived polyester polyol is an amorphous solid. Preferably, such polyester polyol has an acid value from 0.1 to 3 mgKOH/g. Preferably, such polyester polyol has a hydroxy value from 20 to 100 mgKOH/g, and more preferably from 30 to 80 mgKOH/g. Preferably, such polyester polyol has a Tg from -15 to 80°C, and more preferably from -10 to 60°C.

Another objective of the present invention is to provide a reactive adhesive composition, comprising a polyol component comprising at least one polyester polyol according to the present invention and an isocyanate component comprising at least one polyfunctional isocyanate.

According to the present invention, the reactive adhesive composition comprises the polyester polyol in an amount of from 5% to 80% by weight, preferably 10% to 50% by weight, based on the total weight of the reactive adhesive composition.

Yet another objective of the present invention is to provide a polyurethane adhesive composition, comprising a prepolymer being a reaction product obtained from a reaction mixture comprising a polyol component comprising at least one polyester polyol according to the present invention, and an isocyanate component comprising at least one polyfunctional isocyanate.

According to the present invention, the reactants of the prepolymer comprises the polyester polyol in an amount of from 5% to 80% by weight, preferably 10% to 50% by weight, based on the total weight of the reactants.

Polyfunctional isocyanates, which may be used to practice the invention, include alkylene diisocyanates, cycloalkylene diisocyanates, aromatic diisocyanates and aliphatic-aromatic diisocyanates. Specific examples of suitable isocyanate-containing compounds include, but are not limited to, ethylene diisocyanate, ethylidene diisocyanate, propylene diisocyanate, butylene diisocyanate, trimethylene diisocyanate, hexamethylene diisocyanate, toluene diisocyanate, cyclopentylene-1, 3-diisocyanate, cyclo-hexylene-1,4-diisocyanate, cyclohexylene-1,2-diisocyanate, 4,4'-diphenylmethane diisocyanate, 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl4,4'-diisocyanate, azobenzene4,4'-diisocyanate, diphenylsulphone-4,4'-diisocyanate, 2,4-tolylene diisocyanate, dichlorohexa-methylene diisocyanate, furfurylidene diisocyanate, 1-chlorobenzene-2,4-diisocyanate, 4,4',4"-triisocyanatotriphenylmethane, 1,3,5-triisocyanato-benzene, 2,4,6-triisocyanato-toluene, 4,4'-dimethyldiphenyl-methane-2,2',5,5-tetratetraisocyanate, and the like. While such compounds are commercially available, methods for synthesizing such compounds are well known in the art. The oligomers such as dimers or trimers of the above-mention monomeric isocyanates can also be utilized in the present invention. Preferably, the polyfunctional isocyanate is 4,4'-diphenylmethane diisocyanate (MDI).

The polyfunctional isocyanates also include blocked polyisocyanates, such as the reaction products of a mono-ol or mono- hydroxy phenolic compound with an organic polyisocyanate. This includes an organic compounds that contain at least two isocyanato groups and include the hydrocarbon diisocyanates (e.g., the alkylene diisocyanates and the arylene diisocyanates), as well as known triisocyanates and polymethylene poly(phenylene isocyanates).

Illustrative polyisocyanates for use in making the blocked isocyanates are: 2,4'-diisocyanatotoluene, 2,6-diisocyanatotoluene, methylene bis(4-cyclohexyl isocyanate), 1,2-diisocyanatoethane, 1,3-diisocyanatopropane, 1,2-diisocyanatopropane, 1,4-diisocyanatobutane, 1,5-diisocyanatopentane, 1,6-diisocyanatohexane, bis(3-isocyanatopropyl)ether, bis(3-isocyanatopropyl) sulfide, 1,7-diisocyanatoheptane, 1,5-diisocyanato-2,2-dimethylpentane, 1,6-diisocyanato-3-methoxyhexane, 1,8-diisocyanatooctane, 1,5-diisocyanato-2,2,4-trimethypentane, 1,9-diisocyanatononane, 1,10-disocyanatopropyl)ether of 1,4-butylene glycol, 1,11-diisocyanatoundecane, 1,12-diisocyanatododecane, bis(isocyanatohexyl) sulfide, 1,4-diisocyanatobenzene, 2,4-diisocyanatotolylene, 2,6-diisocyanatotolylene, 1,3-diisocyanato-o-xylene, 1,3-diisocyanato-m-xylene, 1,3-diisocyanato-p-xylene, 2,4-diisocyanato-I-chlorobenzene, 2,4-diisocyanato-I-nitrobenzene, 2,5-diisocyanato-I-nitrobenzene, 4,4-diphenylmethylene diisocyanate, 3,3-diphenylmethylene diisocyanate, polymethylene poly(phenyleneisocyanates), isophorone diisocyanate and mixtures thereof.

According to the present invention, the reactive adhesive compositions or the reactants of the prepolymers comprise the polyfunctional isocyanate in an amount of from 5% to 50% by weight, preferably 10% to 30% by weight, based on the total weight of the reactive adhesive composition or the reactants.

The polyol component of the reactive adhesion compositions or the reactants of the prepolymers may comprise other polymeric polyols to further improve the properties of the adhesive. Such other polymeric polyols can be bio-based derived or fossil-based. Preferably, such polymeric polyols are also bio-based derived so as to increase the content of biomass in the adhesive composition. In one preferred embodiment, the polyol component further comprises other bio-based polymeric polyols. In another preferred embodiment, the amount of fully bio-based derived polyester polyol and other bio-based polymeric polyols (if present) is from 50% to 85% by weight, based on the total weight of the reactive adhesive composition.

If present, the other polymeric polyols are present in the adhesive composition in an amount of 1 to 50 % by weight based on the total weight of the adhesive composition.

In a preferred embodiment, the molar ratio of the at least one polyfunctional isocyanate to the at least one polyester polyol according to the present invention and the other polymeric polyols (if present), expressed as NCO/OH, is 5:1 to 1:1, preferably 2.5:1 to 1.05:1.

A catalyst may be comprised in the reactive adhesive composition. In case of a two-component adhesive composition, it can be contained in the isocyanate component or polyol component. When a catalyst is used, a crosslinking reaction between the hydroxyl group and the isocyanate group of the polyfunctional isocyanate is promoted. Examples of the catalyst include tertiary amine compounds and organometallic compounds.

Examples of the tertiary amine compound include triethylamine, triethylenediamine, N, N-dimethylbenzylamine, N-methylmorpholine, diazabicycloundecene (also known as DBU), and the like.

Examples of the organometallic compound include a tin compound and a non-tin compound.

Examples of the tin compound include dibutyltin dichloride, dibutyltin oxide, dibutyltin dibromide, dibutyltin dimaleate, dibutyltin dilaurate (also known as DBTDL), dibutyltin diacetate, dibutyltin sulfide, tributyltin sulfide, tributyltin oxide, Examples include tributyltin acetate, triethyltin ethoxide, tributyltin ethoxide, dioctyltin oxide, tributyltin chloride, tributyltin trichloroacetate, and tin 2-ethylhexanoate.

Examples of non-tin compounds include titanium compounds such as dibutyltitanium dichloride, tetrabutyltitanate, and butoxytitanium trichloride, lead compounds such as lead oleate, lead 2-ethylhexanoate, lead benzoate, and lead naphthenate. -Iron compounds such as iron ethylhexanoate and iron 2,4-pentadionate, cobalt compounds such as cobalt benzoate and cobalt 2-ethylhexanoate, zinc compounds such as zinc naphthenate and zinc 2-ethylhexanoate and zirconium naphthenate. Among these, diazabicycloundecene (DBU), dibutyltin dilaurate (DBTDL), zinc 2-ethylhexanoate and the like are preferable in terms of reactivity and hygiene.

The catalyst of adhesive composition can be used alone or in combination of two or more.

The adhesive composition according to the present invention may contain or not contain an organic solvent. Examples of organic solvents would include heterocyclic, aliphatic, or aromatic hydrocarbons such as toluene, isophorone, xylene, mono- or polyhydric alcohols such as ethylhexanol, butoxypropanol, isopropanol, butyl diglycol, methanol, ethanol, propanol, and butanol, ethers such as diethylene glycol dimethyl ether and dipropylene glycol methyl ether, ethyl glycol and butyl glycol, esters such as ethyl acetate, butyl acetate, pentyl acetate, or ethyl ethoxypropionate, ketones such as cyclohexanone, methyl ethyl ketone (MEK), methyl amyl ketone, methyl isobutyl ketone (MIBK), and acetone, and amides, such as N-methylpyrrolidone, N-ethylpyrrolidone, methoxy propyl acetate and dimethylformamide.

While the reactive adhesive compositions may be used directly as described above, if desired the adhesive compositions of the present invention may also be formulated with conventional additives which are compatible with the composition. The additives may be comprised in the polyol component and/or the isocyanate component as long as they are inert to other ingredients such as the polyols and/or isocyanates. Such additives include adhesion promoters, defoamers, optical brighteners, dispensing agents, pigments, viscosity modifiers and mixtures thereof.

Suitable adhesion promoters to be used in the adhesive compositions according to the present invention are for example silane compounds such as mercaptopropyltrimethoxysilane, β-(3,4-epoxycyclohexyl)ethyltrimethoxysilane, γ-glycidoxypropyltrimethoxysilane, and 3-acryloxypropyltrimethoxysilane, N-β-(aminoethyl)-γ-aminopropyltrimethoxysilane, bis-(γ-trimethoxysilylpropyl)amine, N-β-(aminoethyl)-gammaaminopropylmethyldimethoxysilane, tris-(γ-trimethoxylsilyl)isocyanurate and mixtures thereof.

Suitable defoamers to be used as additive are for example acrylate copolymers.

Suitable optical brightener to be used as additive is for example 2,5-thiophenediylbis(5-tert-butyl-1,3-benzoxazole).

Suitable dispensing agents to be used are for example high molecular weight alkyloamino amides, hydroxy functional carboxylic acid esters and structured acrylate copolymers.

Suitable pigments to be used are for example pigment pastes and colour pastes.

Suitable viscosity modifier to be used is for example fumed silica.

The adhesive compositions/systems of the present invention can be produced by mixing the components/parts/prepolymer and the optional additives. There is no particular limitation on the mixing method, as long as the objective adhesive of the present invention can be obtained. There is also no particular limitation on the order of mixing components. The adhesive composition/system according to the present invention can be produced without requiring a special mixing method and a special order of mixing.

The invention also provides a method for bonding articles together which comprises applying the adhesive systems of the invention in a liquid form to a first article, bringing a second article in contact with the system applied to the first article, and subjecting the applied system to conditions which will allow the system to cure and bind the substrates. The composition is typically distributed and stored in its liquid or solid form and is stored in the absence of moisture. Also provided is an article of manufacture comprising the cured product of adhesive composition according to the present invention.

The invention will be illustrated in more detail by way of the following examples which are not to be understood as limiting the concept of the invention.

### Examples

The following materials were used in the examples.

Sebacic acid was obtained from Sigma Aldrich.

Succinic acid was obtained from Sigma Aldrich.

Isosorbide was obtained from Roquette under the trade name of Polysorb PA.

1,3-Butanediol was obtained from Godavari Biorefineries

1,2-Propandiol was obtained from Sigma Aldrich.

Ethylene glycol was obtained from Sigma Aldrich.

Dimer fatty acid was obtained from Croda under the trade name of Pripol.

Phosphinic acid was obtained from Sigma Aldrich.

Orthophosphoric acid was obtained from Sigma Aldrich.

Titan(IV)isopropylate was obtained from Sigma Aldrich.

2,4'-MDI was obtained from Covestro.

### Preparation of polyester polyols

The inventive examples of polyester polyols (Ex. 1 to Ex. 6) were prepared according to the formulations in Table 1. The comparative examples of polyester polyols (CEx. 1 to CEx. 6) were prepared according to the formulations in Table 2.

A 1 or 5 litre, 4 neck flask equipped with a nitrogen sparge tube, thermocouple, overhead stirrer and distillation arm was charged with polyacid(s) and polyol(s). The mixture was heated stepwise to maximum 220°C under nitrogen flow. The complete reaction took approximately 20h to 40h depending on reaction compositions (monomers and catalyst). An aqueous solution of catalyst in 1:1 weight ratio was added directly from the beginning or during the course of the polycondensation reaction. Subsequently, the pressure of the system was reduced stepwise to 10-300 mbar to achieve total conversion. Once the acid value reached a value of 5 mg KOH/g or less, the reaction was cooled. The polyester polyol was characterized by its acid value in mg KOH/g, hydroxyl value in mg KOH/g, viscosity in Pa·s at a specific temperature as well as Mn in g/mol according to the GPC method. DSC measurements were performed in order to determine the Tg and melting point Tm in °C of the final polyester polyols.

**Table 1. Reactants and properties of the inventive polyester polyols**

| **Reactants** | Ex. 1 | Ex. 2 | Ex. 3 | Ex. 4 | Ex. 5 | Ex. 6 |
|---|---|---|---|---|---|---|
| Sebacic acid (weight in grams) | - | 129.47 | 129.5 | 254.48 | 245.58 | 238.02 |
| Sebacic acid (mol%) | - | 18.6 | 19.1 | 45.9 | 45.3 | 45.2 |
| Succinic acid (weight in grams) | 86.58 | 113.33 | 113.35 | - | - | - |
| Succinic acid (mol%) | 38.2 | 27.9 | 28.6 | - | - | - |
| 1,3-Butanediol (weight in grams) | - | - | - | - | - | 75.31 |
| 1,3-Butanediol (mol%) | - | - | - | - | - | 30.1 |
| Dimer fatty acid (weight in grams) | 83.25 | - | - | - | - | - |
| Dimer fatty acid (mol%) | 7.5 | - | - | - | - | - |
| Ethylene glycol (weight in grams) | - | - | - | 52.63 | - | - |
| Ethylene glycol (mol%) | - | - | - | 30.9 | - | - |
| 1,2-Propandiol (weight in grams) | - | - | - | - | 65.03 | - |
| 1,2-Propandiol (mol%) | - | - | - | - | 31.9 | - |
| Isosorbide (weight in grams) | 152.22 | 268.9 | 256.33 | 92.88 | 89.43 | 86.73 |
| Isosorbide (mol%) | 54.3 | 53.5 | 52.3 | 23.2 | 22.8 | 22.8 |
| Phosphinic acid (weight in grams) | 0.61 | 0.96 | 0.94 | 0.75 | 0.75 | 0.75 |
| Phosphinic acid (% by weight) | 0.19 | 0.19 | 0.19 | 0.19 | 0.19 | 0.19 |

| **Properties** | | | | | | |
|---|---|---|---|---|---|---|
| Acid number (mgKOH/g) | 1.6 | 2.1 | 2.8 | 0.2 | 1.0 | 2.2 |
| OH number (mgKOH/g) | 61 | 60 | 41 | 55 | 62 | 60 |
| Viscosity@80°C (Pa·s) | 363 | 105 | 283.5 | 0.6 | 1.0 | 0.9 |
| Molecular weight (Mn, g/mol) | 2644 | 2900 | 2223 | 3364 | 2554 | 2618 |
| Tg (°C) | 21 | 25 | 29 | - | -37.5 | -44 |
| Tm (°C) | - | - | - | 46 | - | - |
| Physical state | AS¹ | AS¹ | AS¹ | CS² | AL³ | AL³ |
| Color | Pale yellow to yellowish | Colorless to pale yellow | Colorless to pale yellow | White to pale yellow | Colorless to pale yellow | Colorless to pale yellow |

| | | | | | | |
|---|---|---|---|---|---|---|
| ¹AS: amorphous solid; ²CS: crystalline solid; ³AL: amorphous liquid | | | | | | |

**Table 2. Reactants and properties of polyester polyols not according to the present invention**

| **Reactants** | CEx. 1 | CEx. 2 | CEx. 3 | CEx. 4 |
|---|---|---|---|---|
| Sebacic acid (weight in grams) | - | 787.3 | 1794.9 | 1782.2 |
| Sebacic acid (mol%) | - | 19.3 | 46.1 | 45.8 |
| Succinic acid (weight in grams) | 86.69 | 689.6 | - | - |
| Succinic acid (mol%) | 38.3 | 29.0 | - | - |
| 1,3-Butanediol (weight in grams) | - | - | - | 540 |
| 1,3-Butanediol (mol%) | - | - | - | 31.1 |
| 1,4-Butanediol (weight in grams) | - | - | 531 | - |
| 1,4-Butanediol (mol%) | - | - | 30.6 | - |
| Dimer fatty acid (weight in grams) | 83.25 | - | - | - |
| Dimer fatty acid (mol%) | 7.4 | - | - | - |
| Isosorbide (weight in grams) | 152.1 | 1523.1 | 654.9 | 650.3 |
| Isosorbide (mol%) | 54.3 | 51.7 | 23.3 | 23.1 |
| Titan(IV)isopropylate (weight in grams) | 0.07 | 0.9 | 0.6 | 0.59 |
| Titan (IV) isopropylate (% by weight) | 0.02 | 0.02 | 0.02 | 0.02 |
| Orthophosphoric acid (weight in grams) | 0.11 | 1.02 | 0.76 | 0.76 |
| Orthophosphoric acid (% by weight) | 0.03 | 0.03 | 0.03 | 0.03 |

| **Properties** | | | | |
|---|---|---|---|---|
| Acid number (mgKOH/g) | 1.4 | 2.7 | 1.0 | 1.0 |
| OH number (mgKOH/g) | 59 | 38 | 62 | 68 |
| Viscosity@80°C (Pa·s) | 231 | 333 | 1.65 | 1.0 |
| Molecular weight (Mn, g/mol) | 2681 | 4206 | 2555 | 2605 |
| Tg (°C) | 19.5 | 26 | - | -43 |
| Tm (°C) | - | - | 36 | |
| Physical state | AS¹ | AS¹ | CS² | AL³ |
| Color | Dark orange to brown | Dark brown to black | Dark brown | Dark brown |

| | | | | |
|---|---|---|---|---|
| ¹AS: amorphous solid; ²CS: crystalline solid; ³AL: amorphous liquid | | | | |

As can be seen from Tables 1 and 2, the prepared polyester polyols according to the present invention exhibited colorless to pale yellow or yellowish color while the prepared polyester polyols not according to the present invention exhibited dark brown to black color, indicating that the degradation of isosorbide occurred in the polymerization process.

## Claims

1. A polyester polyol derived from a reaction mixture comprising
at least one anhydrohexitol,
at least one polyfunctional carboxylic acid, and
at least one non-metal inorganic acidic catalyst, selected from a non-metal inorganic acidic compound having phosphorus atom in oxidation state of +1, a non-metal inorganic acidic compound having phosphorus atom in oxidation state of +3, and mixture thereof.

2. The polyester polyol according to claim 1, wherein the anhydrohexitol is isosorbide.

3. The polyester polyol according to claim 1 or 2, wherein the polyfunctional carboxylic acid is bio-based, and preferably selected from adipic acid, succinic acid, azelaic acid, sebacic acid, dodecandioic acid, tetradecane dioic acid, hexadecane dioic acid, octadecane dioic acid, itaconic acid, furandicarboxylic acid, isophthalic acid, terephthalic acid, orthophthalic acid, dimerized fatty acid, trimerized fatty acid, and mixture thereof.

4. The polyester polyol according to any of claims 1 to 3, wherein the at least one non-metal inorganic acidic catalyst is selected from phosphinic acid, phosphonic acid, and mixture thereof.

5. The polyester polyol according to any of claims 1 to 4, wherein the amount of the at least one anhydrohexitol is from 20 mol% to 60 mol% based on the total moles of the reactants.

6. The polyester polyol according to any of claims 1 to 5, wherein the amount of the at least one polyfunctional carboxylic acid is no larger than 60 mol%, preferably from 20 mol% to 50 mol%, based on the total moles of the reactants.

7. The polyester polyol according to any of claims 1 to 6, wherein the reaction mixture further comprises at least one polyol other than anhydrohexitol, preferably bio-based, and more preferably selected from glycerol, 1,2-propanediol, 1,3-propanediol, 1,3-butanediol, 1,4-butanediol, 1,4-pentanediol, 1,5-pentanediol, ethylene glycol, diethylene glycol, triethylene glycol, and mixture thereof.

8. The polyester polyol according to claim 7, wherein the amount of the at least one polyol other than anhydrohexitol is from 1 mol% to 50 mol%, preferably 10 mol% to 40 mol% based on the total moles of the reactants.

9. The polyester polyol according to any of claims 1 to 8, wherein the polyester polyol is liquid amorphous, solid crystalline or solid amorphous.

10. The polyester polyol according to any of claims 1 to 9, wherein the reaction mixture essentially comprises no metal catalyst, preferably comprises less than 0.02% by weight of metal catalyst based on the total weight of the reaction mixture.

11. The polyester polyol according to any of claims 1 to 9, comprising metal elements in an amount of less than 0.002%, preferably less than 0.001% by weight of polyester polyol.

12. A method of preparing a polyester polyol according to any of claims 1 to 11, comprising the steps:
1) providing a reaction mixture comprising at least one anhydrohexitol, at least one polyfunctional carboxylic acid, at least one non-metal inorganic acidic catalyst and optionally at least one linear or branched aliphatic polyol,
2) heating stepwise the reaction mixture to 200°C to 220°C and maintaining 20 to 40 hours under nitrogen flow,
3) reducing the pressure stepwise to 1 to 300 mbar to complete the reaction and obtain a reaction product, and
4) cooling the reaction product when the acid value of the reaction product is no more than 5, and obtaining a polyester polyol.

13. A polyurethane adhesive composition, comprising a polyol component comprising at least one polyester polyol according to any of claims 1 to 10 and an isocyanate component comprising at least one polyfunctional isocyanate.

14. A polyurethane adhesive composition, comprising a prepolymer being a reaction product obtained by a reaction mixture comprising a polyol component comprising at least one polyester polyol according to any of claims 1 to 10, and an isocyanate component comprising at least one polyfunctional isocyanate.

15. An article of manufacture comprising the cured product of the polyurethane adhesive composition according to claim 13 or 14.

## Patentansprüche

1. Polyesterpolyol, das aus einer Umsetzungsmischung stammt, umfassend
mindestens ein Anhydrohexitol,
mindestens eine polyfunktionelle Carbonsäure und
mindestens einen nichtmetallischen anorganischen sauren Katalysator, der aus einer nichtmetallischen anorganischen sauren Verbindung, die ein Phosphoratom in einem Oxidationszustand von +1 aufweist, einer nichtmetallischen anorganischen sauren Verbindung, die ein Phosphoratom in dem Oxidationszustand von +3 aufweist, und einer Mischung davon ausgewählt ist.

2. Polyesterpolyol nach Anspruch 1, wobei das Anhydrohexitol Isosorbid ist.

3. Polyesterpolyol nach Anspruch 1 oder 2, wobei die polyfunktionelle Carbonsäure biobasiert ist und vorzugsweise aus Adipinsäure, Bernsteinsäure, Azelainsäure, Sebacinsäure, Dodecandisäure, Tetradecandisäure, Hexadecandisäure, Octadecandisäure, Itaconsäure, Furandicarbonsäure, Isophthalsäure, Terephthalsäure, Orthophthalsäure, dimerisierter Fettsäure, trimerisierter Fettsäure und einer Mischung davon ausgewählt ist.

4. Polyesterpolyol nach einem der Ansprüche 1 bis 3, wobei der mindestens eine nichtmetallische anorganische saure Katalysator aus Phosphinsäure, Phosphonsäure und einer Mischung davon ausgewählt ist.

5. Polyesterpolyol nach einem der Ansprüche 1 bis 4, wobei die Menge des mindestens einen Anhydrohexitols von 20 Mol-% bis 60 Mol-% beträgt, bezogen auf die Gesamtmolzahl der Reaktanten.

6. Polyesterpolyol nach einem der Ansprüche 1 bis 5, wobei die Menge der mindestens einen polyfunktionellen Carbonsäure nicht größer als 60 Mol-%, vorzugsweise von 20 Mol-% bis 50 Mol-%, bezogen auf die Gesamtmolzahl der Reaktanten, ist.

7. Polyesterpolyol nach einem der Ansprüche 1 bis 6, wobei die Umsetzungsmischung ferner mindestens ein anderes Polyol als Anhydrohexitol, vorzugsweise biobasiert, und das weiter bevorzugt aus Glycerin, 1,2-Propandiol, 1,3-Propandiol, 1,3-Butandiol, 1,4-Butandiol, 1,4-Pentandiol, 1,5-Pentandiol, Ethylenglycol, Diethylenglycol, Triethylenglycol und einer Mischung davon ausgewählt ist, umfasst.

8. Polyesterpolyol nach Anspruch 7, wobei die Menge des mindestens einen anderen Polyols als Anhydrohexitol von 1 Mol-% bis 50 Mol-%, vorzugsweise 10 Mol-% bis 40 Mol-%, bezogen auf die Gesamtmolzahl der Reaktanten, beträgt.

9. Polyesterpolyol nach einem der Ansprüche 1 bis 8, wobei das Polyesterpolyol flüssig-amorph, fest-kristallin oder fest-amorph ist.

10. Polyesterpolyol nach einem der Ansprüche 1 bis 9, wobei die Umsetzungsmischung im Wesentlichen keinen Metallkatalysator umfasst, vorzugsweise zu weniger als 0,02 Gew.-% den Metallkatalysator, bezogen auf das Gesamtgewicht der Umsetzungsmischung, umfasst.

11. Polyesterpolyol nach einem der Ansprüche 1 bis 9, umfassend Metallelemente in einer Menge von zu weniger als 0,002 Gew.-%, vorzugsweise zu weniger als 0,001 Gew.-%, des Polyesterpolyols.

12. Verfahren zum Herstellen eines Polyesterpolyols nach einem der Ansprüche 1 bis 11, umfassend die Schritte:
1) Bereitstellen einer Umsetzungsmischung, umfassend mindestens ein Anhydrohexitol, mindestens eine polyfunktionelle Carbonsäure, mindestens einen nichtmetallischen anorganischen sauren Katalysator und optional mindestens ein lineares oder verzweigtes aliphatisches Polyol,
2) schrittweises Erhitzen der Umsetzungsmischung auf 200 °C bis 220 °C und Erhalten für 20 bis 40 Stunden unter Stickstoffstrom,
3) schrittweises Verringern des Drucks auf 1 bis 300 mbar, um die Umsetzung zu beenden und ein Umsetzungsprodukt zu erhalten, und
4) Abkühlen des Umsetzungsprodukts, wenn der Säurewert des Umsetzungsprodukts nicht mehr als 5 beträgt, und Erhalten eines Polyesterpolyols.

13. Polyurethan-Klebstoffzusammensetzung, umfassend eine Polyolkomponente, umfassend mindestens ein Polyesterpolyol nach einem der Ansprüche 1 bis 10, und eine Isocyanatkomponente, umfassend mindestens ein polyfunktionelles Isocyanat.

14. Polyurethan-Klebstoffzusammensetzung, umfassend ein Präpolymer, das ein Umsetzungsprodukt ist, das durch eine Umsetzungsmischung erhalten wird, umfassend eine Polyolkomponente, umfassend mindestens ein Polyesterpolyol nach einem der Ansprüche 1 bis 10, und eine Isocyanatkomponente, umfassend mindestens ein polyfunktionelles Isocyanat.

15. Fertigungserzeugnis, umfassend das ausgehärtete Produkt der Polyurethan-Klebstoffzusammensetzung nach Anspruch 13 oder 14.

## Revendications

1. Polyol de polyester dérivé d'un mélange réactionnel comprenant
au moins un anhydrohexitol,
au moins un acide carboxylique polyfonctionnel, et
au moins un catalyseur acide inorganique non métallique, choisi parmi un composé acide inorganique non métallique ayant un atome de phosphore à l'état d'oxydation +1, un composé acide inorganique non métallique ayant un atome de phosphore à l'état d'oxydation +3, et mélange de ceux-ci.

2. Polyol de polyester selon la revendication 1, dans lequel l'anhydrohexitol est l'isosorbide.

3. Polyol de polyester selon la revendication 1 ou 2, dans lequel l'acide carboxylique polyfonctionnel est d'origine biologique, et de préférence choisi parmi acide adipique, acide succinique, acide azélaïque, acide sébacique, acide dodécanedioïque, acide tétradécanedioïque, acide hexadécanedioïque, acide octadécanedioïque, acide itaconique, acide furanedicarboxylique, acide isophtalique, acide téréphtalique, acide orthophtalique, acide gras dimérisé, acide gras trimérisé, et mélange de ceux-ci.

4. Polyol de polyester selon l'une quelconque des revendications 1 à 3, dans lequel l'au moins un catalyseur acide inorganique non métallique est choisi parmi acide phosphinique, acide phosphonique et mélange de ceux-ci.

5. Polyol de polyester selon l'une quelconque des revendications 1 à 4, dans lequel la quantité de l'au moins un anhydrohexitol va de 20 % molaire à 60 % molaire sur la base des moles totales des réactifs.

6. Polyol de polyester selon l'une quelconque des revendications 1 à 5, dans lequel la quantité de l'au moins un acide carboxylique polyfonctionnel n'est pas supérieure à 60 % molaire, de préférence de 20 % molaire à 50 % molaire, sur la base des moles totales des réactifs.

7. Polyol de polyester selon l'une quelconque des revendications 1 à 6, dans lequel le mélange réactionnel comprend en outre au moins un polyol autre que l'anhydrohexitol, de préférence d'origine biologique, et de manière particulièrement préférée choisi parmi glycérol, 1,2-propanediol, 1,3-propanediol, 1,3-butanediol, 1,4-butanediol, 1,4-pentanediol, 1,5-pentanediol, éthylène glycol, diéthylène glycol, triéthylène glycol, et mélange de ceux-ci.

8. Polyol de polyester selon la revendication 7, dans lequel la quantité de l'au moins un polyol autre que l'anhydrohexitol va de 1 % molaire à 50 % molaire, de préférence de 10 % molaire à 40 % molaire sur la base des moles totales des réactifs.

9. Polyol de polyester selon l'une quelconque des revendications 1 à 8, dans lequel le polyol de polyester est liquide amorphe, solide cristallin ou solide amorphe.

10. Polyol de polyester selon l'une quelconque des revendications 1 à 9, dans lequel le mélange réactionnel ne comprend essentiellement aucun catalyseur métallique, et comprend de préférence moins de 0,02 % en poids de catalyseur métallique sur la base du poids total du mélange réactionnel.

11. Polyol de polyester selon l'une quelconque des revendications 1 à 9, comprenant des éléments métalliques en une quantité inférieure à 0,002 %, de préférence inférieure à 0,001 % en poids de polyol de polyester.

12. Procédé de préparation d'un polyol de polyester selon l'une quelconque des revendications 1 à 11, comprenant les étapes consistant à :
1) fournir un mélange réactionnel comprenant au moins un anhydrohexitol, au moins un acide carboxylique polyfonctionnel, au moins un catalyseur acide inorganique non métallique et éventuellement au moins un polyol aliphatique linéaire ou ramifié,
2) chauffer progressivement le mélange réactionnel à 200 °C à 220 °C et le maintenir 20 à 40 heures sous flux d'azote,
3) réduire progressivement la pression à 1 à 300 mbar pour achever la réaction et obtenir un produit de réaction, et
4) refroidir le produit de réaction lorsque l'indice d'acidité du produit de réaction n'est pas supérieur à 5, et obtenir un polyol de polyester.

13. Composition adhésive de polyuréthane, comprenant un composant polyol comprenant au moins un polyol de polyester selon l'une quelconque des revendications 1 à 10 et un composant isocyanate comprenant au moins un isocyanate polyfonctionnel.

14. Composition adhésive de polyuréthane, comprenant un prépolymère qui est un produit de réaction obtenu par un mélange réactionnel comprenant un composant polyol comprenant au moins un polyol de polyester selon l'une quelconque des revendications 1 à 10, et un composant isocyanate comprenant au moins un isocyanate polyfonctionnel.

15. Article de fabrication comprenant le produit durci de la composition adhésive de polyuréthane selon la revendication 13 ou 14.
